# EUROPEAN PATENT APPLICATION

(11) **EP 4 459 752 A1**
(43) Date of publication of application: **06.11.2024**
(21) Application number: 23746168.6
(22) Date of filing: 18.01.2023
(51) Int. Cl.: H01M 50/10, H01M 50/249, H01M 50/102

(54) **BATTERY CELL, BATTERY, AND ELECTRIC DEVICE**

(30) Priority: 27.01.2022 CN 202220230473 U
(71) Applicant: Contemporary Amperex Technology Co., Limited, Ningde, Fujian 352100 (CN)
(72) Inventor: SU, Huasheng, Ningde, Fujian 352100 (CN); XING, Chengyou, Ningde, Fujian 352100 (CN); XU, Chunguang, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2023/072807
(87) International publication number: WO 2023/143286

(57) **Abstract**

The present application provides a battery cell, a battery, and an electrical device. The battery cell comprises a case (1), a cell (2), a first expandable member (3), and a second expandable member (4). The cell (2) is arranged inside the case (1). There is a gap between an outer wall of the cell (2) and an inner wall of the case (1). The first expandable member (3) and the second expandable member (4) are both arranged in the gap and are configured to expand when encountering an electrolyte solution to fill the gap. The first expandable member (3) and the second expandable member (4) are spaced apart. The first expandable member and the second expandable member in the present application can expand when encountering the electrolyte solution. After expansion, the gap between the cell and the case can be reduced, thereby restricting relative movement between the cell and the case, reducing the possibility of fatigue fracture of connecting sheets, and contributing to protecting tabs.

## Description

### CROSS-REFERENCE TO RELATED APPLICATION

The present application claims priority to Chinese Patent Application No. 202220230473.0 filed on January 27, 2022 and titled "BATTERY CELL, BATTERY, AND ELECTRICAL DEVICE," the entire content of which is incorporated herein by reference.

### TECHNICAL FIELD

The present application relates to the technical field of batteries, and in particular, to a battery cell, a battery and an electrical device.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor related to their development.

Assembly gaps inside the battery impair the service life of the battery.

### SUMMARY OF THE INVENTION

The present application provides a battery cell, a battery, and an electrical device, which can prevent assembly gaps from impairing the service life of the battery.

In a first aspect, the present application provides a battery cell, comprising:
a case;
a cell arranged inside the case, there being a gap between an outer wall of the cell and an inner wall of the case;
a first expandable member arranged in the gap, the first expandable member being configured to expand when encountering an electrolyte solution to fill the gap; and
a second expandable member arranged in the gap, the second expandable member being configured to expand when encountering an electrolyte solution to fill the gap, the first expandable member and the second expandable member being spaced apart.

The first expandable member and the second expandable member expand when encountering the electrolyte solution added into the case, After expansion, they can fill the gap between the cell and the case, reduce a movable space of the cell, and reduce the possibility of fatigue fracture of an adapter plate caused by relative movement between the cell and the case, which is also conductive to protecting tabs, reducing the possibility for the tabs to be stretched or compressed, and effectively extending the service life of the tabs, the adapter plate, and the whole battery cell.

In some embodiments, the cell comprises a labeling portion, the labeling portion is labeled with preset information, and the labeling portion is located between the first expandable member and the second expandable member. In this way, the labeling portion can be exposed from the gap between the first expandable member and the second expandable member, thereby preventing the first expandable member and the second expandable member from blocking the labeling portion.

In some embodiments, the first expandable member and/or the second expandable member are/is configured to, after expansion, restrict relative movement between the cell and the case in a radial direction and an axial direction of the cell.

After expansion, the first expandable member and/or the second expandable member can restrict the relative movement between the cell and the case in the radial direction and the axial direction of the cell, thereby reducing the swaying of the cell in the case, reducing the possibility of fatigue of connecting sheets; reducing the possibility for the tabs to be stretched or compressed, and effectively protecting the tabs.

In some embodiments, the first expandable member is arranged circumferentially around the cell; and/or the second expandable member is arranged circumferentially around the cell. The advantage of this arrangement is that the gap can be filled in the whole circumferential direction of the cell, thus effectively ensuring the restriction effects on the movement of the cell relative to the case.

In some embodiments, the battery cell further comprises an insulating member, the cell comprises a main body part, a first tab extending from a first end of the main body part, and a second tab extending from a second end of the main body part, and the insulating member is configured to electrically isolate the first tab and the second tab from the case respectively.

The insulating member is arranged, so that the first tab and the second tab are electrically isolated from the case respectively to prevent the case from being charged and causing an electric shock accident; and prevent the first tab and the second tab from being electrically connected through the case and causing a short circuit of the battery.

In some embodiments, the insulating member comprises a first insulating member configured to electrically isolate the first tab from the case and a second insulating member configured to electrically isolate the second tab from the case, and the cell comprises the labeling portion located between the first insulating member and the second insulating member. The first insulating member and the second insulating member are arranged, to avoid the labeling portion, and prevent the insulating member from blocking the labeling portion.

In some embodiments, the first insulating member is arranged circumferentially around the first tab; and/or the second insulating member is arranged circumferentially around the second tab.

The first insulating member surrounds in a circumferential direction of the first tab, to achieve comprehensive electrical isolation in the circumferential direction of the first tab.

The second insulating member surrounds in a circumferential direction of the second tab, to achieve comprehensive electrical isolation in the circumferential direction of the second tab.

In some embodiments, the first insulating member is arranged circumferentially around the first tab and at least a part of the main body part; and /or the second insulating member is arranged circumferentially around the second tab and at least a part of the main body part.

The first insulating member surrounds in a circumferential direction of the first tab and at least a part of the main body part, to fix the first insulating member on the main body part, and avoid damage to the first tab due to connection to the first tab.

The second insulating member surrounds in a circumferential direction of the second tab and at least a part of the main body part, to fix the second insulating member on the main body part, and avoid damage to the second tab due to connection to the second tab.

In some embodiments, the first expandable member is arranged between the first insulating member and the inner wall of the case; and/or the second expandable member is arranged between the second insulating member and the inner wall of the case.

The first expandable member is arranged between the first insulating member and the inner wall of the case, to isolate the first expandable member from the first tab through the first insulating member, thereby preventing the first expandable member after expansion from causing extrusion damage to the first tab.

The second expandable member is arranged between the second insulating member and the inner wall of the case, to isolate the second expandable member from the second tab through the second insulating member, thereby preventing the second expandable member after expansion from causing extrusion damage to the second tab.

In some embodiments, the battery cell further comprises a first adhesive, the first insulating member being adhesively connected to the main body part through the first adhesive; and/or the battery cell further comprises a second adhesive, the second insulating member being adhesively connected to the main body part through the second adhesive.

The first insulating member is connected to the main body part through the first adhesive, and the second insulating member is connected to the main body part through the second adhesive. The connections are very firm with easy operations.

In some embodiments, the battery cell further comprises a third adhesive, the first expandable member being adhesively connected to the first insulating member through the third adhesive; and/or the battery cell further comprises a fourth adhesive, the second expandable member being adhesively connected to the second insulating member through the fourth adhesive.

The first insulating member is connected to the first expandable member through the third adhesive, and the second insulating member is connected to the second expandable member through the fourth adhesive. The connections are very firm with easy operations.

In some embodiments, in the axial direction of the cell, there is a preset distance between the first expandable member and the first insulating member; and/or in the axial direction of the cell, there is a preset distance between the second expandable member and the second insulating member. In this way, the first expandable member can be isolated from the first insulating member in the axial direction, and the second expandable member can be isolated from the second insulating member in the axial direction, so that the first insulating member and the second insulating member can be arranged independent of the first expandable member and the second expandable member respectively without the need for matching the first expandable member and the second expandable member, and so that, after expansion, the first expandable member and the second expandable member can contact with the inner wall of the case.

In a second aspect, the present application provides a battery, comprising the battery cell in the above embodiments.

In a third aspect, the present application provides an electrical device, comprising the battery in the above embodiments, wherein the battery is configured to supply electric energy to the electrical device.

The above description merely provides an overview of the technical solutions of the present application. In order to more clearly understand the technical means of the present application, the present application may be implemented based on the contents of the specification, and in order to make the above and other objectives, features, and advantages of the present application more obvious and understandable, detailed description of the present application is listed below.

### DESCRIPTION OF DRAWINGS

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.
FIG. 1 is a schematic structural diagram of an electrical device disclosed in some embodiments of the present application.
FIG. 2 is a schematic structural diagram of a battery disclosed in some embodiments of the present application.
FIG. 3 is a schematic structural diagram of a battery cell disclosed in some embodiments of the present application.
FIG. 4 is a top view of a battery cell disclosed in some embodiments of the present application.
FIG. 5 is a section view along a section A-A in FIG. 4.
FIG. 6 is a schematic structural diagram of a part marked as P shown in FIG. 5 in an unexpanded state.
FIG. 7 is a schematic structural diagram of the part marked as P shown in FIG. 5 in an expanded state.
FIG. 8 is a schematic structural diagram of bonding of a first insulating member and a first expandable member of a battery cell disclosed in some embodiments of the present application.
FIG. 9 is a schematic structural diagram of bonding of a second insulating member and a second expandable member of a battery cell disclosed in some embodiments of the present application.
FIG. 10 is a schematic structural diagram of a battery cell disclosed in some other embodiments of the present application.

In the drawings, the figures are not drawn to the actual scale.

### Description of reference numerals:

1000. vehicle; 100. battery; 200. controller; 300. motor;
10a. box; 101. first cover; 102. second cover; 20a. battery cell;
1. case; 11. accommodating body; 12. first end cover; 13. second end cover; 14. first terminal; 15. first explosion-proof valve; 16. second terminal; 17. third insulating member; 2. cell; 21. labeling portion; 22. main body part; 23. first tab; 24. second tab; 25. first connecting sheet; 26. second connecting sheet; 3. first expandable member ; 4. second expandable member; 5. first insulating member; 6. second insulating member; 7. first adhesive; 8. third adhesive; 9. second adhesive; and 10. fourth adhesive.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as commonly understood by those skilled in the technical field of the present application; the terms used herein are intended only for the purpose of describing specific embodiments, and are not intended to limit the present application; and the terms "comprising" and "having" and any variations thereof in the specification and the claims of the present application and in the above description of drawings are intended to cover non-exclusive inclusions.

In the description of the embodiments of the present application, the technical terms "first," "second," and the like are used only for distinguishing between different objects, and are not to be understood as indicating or implying a relative importance or implicitly specifying the number, particular order, or primary and secondary relation of the technical features indicated. Furthermore, the term "vertical" is not vertical in the strict sense, but is within the margin of error allowed. "Parallel" is not parallel in the strict sense, but within the margin of error allowed.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

In the description of the embodiments of the present application, the meaning of "a plurality of is two or more, unless otherwise explicitly and specifically defined. Similarly, "a plurality of groups" refers to two or more groups, and "a plurality of sheets" refers to two or more sheets, unless otherwise explicitly and specifically defined.

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," and the like are based on the orientation or position relationship shown in the drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," and the like should be understood in a broad sense, such as a fixed connection, a detachable connection, an integral connection; a mechanical connection, an electrical connection; a direct connection, an indirect connection through an intermediate medium, an internal connection of two elements, or an interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

The inventors of the present application noticed that, for a battery cell constituting a battery, after a cell is put in a case, there will be a gap between the cell and the case. This gap will enable the cell to have a certain radial activity space in the case. In a subsequent service process, the cell will sway, thereby resulting in fatigue of an adapter plate, which may cause fracture of the adapter plate, and impairing the service life of the battery cell. Moreover, in an axial direction, axial movement of the cell may also occur, so that tabs are stretched or compressed, thereby reducing the service life of the tabs. In addition, the movement of the cell in the axial direction will also cause fracture of the adapter plate. Therefore, the gap between the cell and the case seriously impairs the service life of the battery cell.

Based on the above findings, the inventors presented through a lot of researches that an expandable member can be arranged in the gap between the cell and the case, the expandable member expands when encountering an electrolyte solution added into the case. After expansion, the expandable member can fill the gap, reduce a movable space of the cell, and reduce the possibility of fatigue fracture of an adapter plate caused by relative movement between the cell and the case, which is also conductive to protecting tabs, reducing the possibility for the tabs to be stretched or compressed, and effectively extending the service life of the tabs, the adapter plate, and the whole battery cell.

The battery cell disclosed in the embodiments of the present application may be used in, but not limited to, electrical devices, such as a vehicle, a ship, or an aircraft. A power source system of the electrical device can be composed of battery cells, batteries, etc. disclosed in the present application, thereby reducing the gap between the cell and the case, reducing the possibility of fatigue fracture of connecting sheets or problems that tabs are stretched or compressed due to relative movement between the cell and the case, and effectively extending the service life of the battery cell and the battery.

An embodiment of the present application provides an electrical device that uses a battery as a power source. The battery is configured to provide electric energy to the electrical device. The electrical device may be, but is not limited to, a mobile phone, a portable device, a laptop, a battery truck, an electric car, a ship, a spacecraft, an electric toy, and an electric tool, etc. For example, the spacecraft includes an airplane, a rocket, a space shuttle, and a spaceship, etc. The electric toy includes a fixed or mobile electric toy, such as a game machine, an electric toy car, an electric toy ship, and an electric toy plane. The electric tool includes an electric metal cutting tool, an electric grinding tool, an electric assembling tool, and an electric tool for railway, such as an electric drill, an electric grinding machine, an electric wrench, an electric screwdriver, an electric hammer, an electric impact drill, a concrete vibrator, and an electric planer.

For ease of description, the following embodiments are illustrated by taking an electrical device being a vehicle 1000 in an embodiment of the present application as an example.

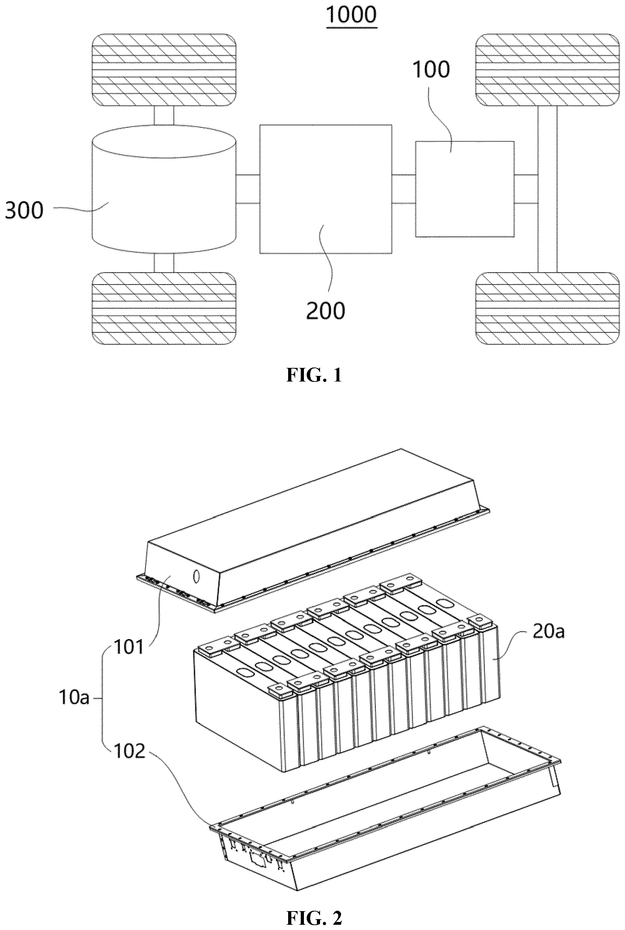

Referring to FIG. 1, FIG. 1 is a schematic structural diagram of a vehicle 1000 provided in some embodiments of the present application. The vehicle 1000 may be a fuel vehicle, a gas vehicle, or a new energy vehicle. The new energy vehicle may be a all-electric vehicle, a hybrid vehicle, or a extended range electric vehicle. A battery 100 is provided within the vehicle 1000. The battery 100 may be arranged at the bottom or head or tail of the vehicle 1000. The battery 100 may be used for powering the vehicle 1000. For example, the battery 100 may be used as an operating power source of the vehicle 1000. The vehicle 1000 may further include a controller 200 and a motor 300. The battery 100 may be used for supplying electric energy for the motor 300 and other components in the vehicle. The controller 200 is used for controlling operation of the motor 300, for example, for meeting operating power demands when the vehicle 1000 is starting, navigating, and driving.

In some embodiments of the present application, the battery 100 not only may serve as an operating power supply of the vehicle 1000, but also may serve as a driving power supply of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 includes a box 10a and a battery cell 20a, and the battery cell 20a is accommodated within the box 10a. The box 10a is configured to provide an accommodating space for the battery cell 20a, and various structures may be used for the box 10a. In some embodiments, the box 10a may include a first cover 101 and a second cover 102. The first cover 101 and the second cover 102 cover each other, such that the first cover 101 and the second cover 102 jointly define an accommodating space for accommodating the battery cell 20a. The second cover 102 may be a hollow structure with one opening end, the first cover 101 may be a platy structure, and the first cover 101 covers on an opening side of the second cover 102, such that the first cover 101 and the second cover 102 jointly define the accommodating space; or the first cover 101 and the second cover 102 each may be a hollow structure with one opening side, and an opening side of the first cover 101 covers on the opening side of the second cover 102. Of course, the box 10a formed by the first cover 101 and the second cover 102 may be of various shapes, such as a cylinder and a cuboid.

In the battery 100, there may be a plurality of battery cells 20a, and there may be series connection, or parallel connection, or parallel-series connection between the plurality of battery cells 20a. The parallel-series connection means that there are both series connection and parallel connection between the plurality of battery cells 20a. The plurality of battery cells 20a may be directly in series connection, parallel connection, or parallel-series connection, and then the whole composed of the plurality of battery cells 20a may be accommodated in the box 10a. Of course, the battery 100 may also be that a plurality of battery cells 20a are in series connection, parallel connection, or parallel-series connection first to form battery modules, and the plurality of battery modules are then in series connection, parallel connection, or parallel-series connection to form a whole accommodated in the box 10a. The battery 100 may further include other structures. For example, the battery 100 may further include a bus component configured to implement electrical connection between the plurality of battery cells 20a.

The battery cell 20a includes a lithium-ion secondary battery, a lithium-ion primary battery, a lithium-sulfur battery, or a sodium/lithium-ion battery, a sodium-ion battery, or a magnesium-ion battery, etc., which is not limited in the embodiments of the present application. The battery cell 20a may present, e.g., a cylinder, a flat body, a cuboid, or other shape, which is not limited in the embodiments of the present application. In the embodiment as shown in FIG. 2, the battery cell 20a presents a cuboid shape. In other embodiments, the battery cell 20a may also present a shape, such as a cylinder or a flat body. Battery cells 20a are generally divided into three types based on the encapsulation method: a cylindrical battery cell, a cuboid battery cell, and a pouch cell, which is not limited in the embodiments of the present application.

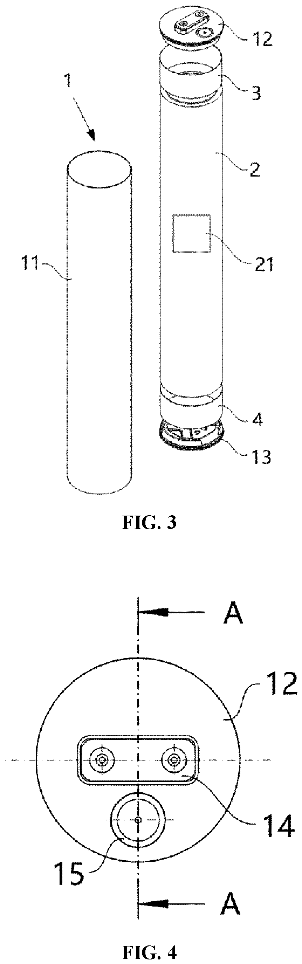

Referring to FIG. 3, a schematic structural diagram of a battery cell 20a provided in some embodiments of the present application is shown. The battery cell 20a refers to a smallest unit constituting a battery. As shown in FIG. 3, the battery cell 20a comprises a case 1, a cell 2, a first expandable member 3, and a second expandable member 4.

The case 1 is a component configured to provide an accommodating space to accommodate the cell, an electrolyte solution, and other components therein. The case 1 comprises an accommodating body 11 with openings at both ends, and a first end cover 12 and a second end cover 13 configured to close the openings at both ends. The accommodating body 11, the first end cover 12, and the second end cover 13 may be independent components. The openings are arranged at both ends of the accommodating body 11 respectively. At the two openings, the first end cover 12 and the second end cover 13 cover the openings respectively, to form an internal environment of the battery cell 20a. Non-restrictively, the first end cover 12, the second end cover 13, and the accommodating body 11 may also be integrated. Specifically, the accommodating body, the first end cover 12, and the second end cover 13 may first form a common connection surface respectively before other components are put in the case. When the inner side of the accommodating body 11 is to be encapsulated, the first end cover 12 and the second end cover 13 cover the accommodating body 11. The accommodating body 11 may be of various shapes and various sizes, such as a cuboid shape, a cylindrical shape, or a hexagonal prism. Specifically, the shape of the accommodating body 11 can be determined based on the specific shape and size of the cell. In the embodiment as shown in FIG. 3, the accommodating body 11 presents a cylindrical shape. The accommodating body 11 may be made of a variety of materials, such as copper, iron, aluminum, stainless steel, aluminum alloy, plastic, etc., which is not particularly limited in the embodiments of the present application.

In other embodiments, the number of openings arranged on the accommodating body 11 of the case 1 may be one, three, or more, and accordingly, one, three, or more end covers are arranged, and the end covers each cover a corresponding opening thereamong, which will not be detailed here.

The accommodating body 11 is a component configured to match the first end cover 12 and the second end cover 13 to form the internal environment of the battery cell 20a. The first end cover 12 and the second end cover 13 are components that cover the openings of the accommodating body 11 to isolate the internal environment of the battery cell 20a from an external environment. Non-restrictively, the shapes of the first end cover 12 and the second end cover 13 may be adapted to the shape of the accommodating body 11 to match the case 11. Optionally, the first end cover 12 and the second end cover 13 may each be made of a material with certain hardness and strength, so that the first end cover 12 and the second end cover 13 can hardly deform during extrusion expansion, and so that the battery cell 20a not only can have higher structural strength, but also can have improved safety performance.

As shown in FIG. 4, the first end cover 12 is provided with a first terminal 14 and a first explosion-proof valve 15. The first terminal 14 may be used for electrical connection to the cell, for outputting or inputting electric energy of the battery cell 20a. The first explosion-proof valve 15 is configured to, when an internal pressure or temperature of the battery cell 20a reaches a threshold, release the internal pressure. The first end cover 12 may also be made of a variety of materials, such as copper, iron, aluminum, stainless steel, aluminum alloy, and plastic, which is not particularly limited in the embodiments of the present application.

In some embodiments, an insulating member may be further provided on an inner side of the first end cover 12. The insulating member may be configured to isolate an electrically connecting component in the accommodating body 11 from the first end cover 12 to reduce a short-circuit risk. As an example, the insulating member may be made of plastic, rubber, etc.

Although not shown in the figure, it is conceivable that the second end cover 13 may be provided with a second terminal 16 and a second explosion-proof valve, and an insulating member may also be provided on an inner side of the second end cover 13 to isolate an electrically connecting component in the accommodation body 11 from the second end cover 13, which will not be detailed here.

The cell is a component in the battery cell 20a where an electrochemical reaction occurs. The case 1 may comprise one or more cells therein. The cell is mainly formed by winding or stacking of a positive electrode plate and a negative electrode plate, and a separator is generally provided between the positive electrode plate and the negative electrode plate.

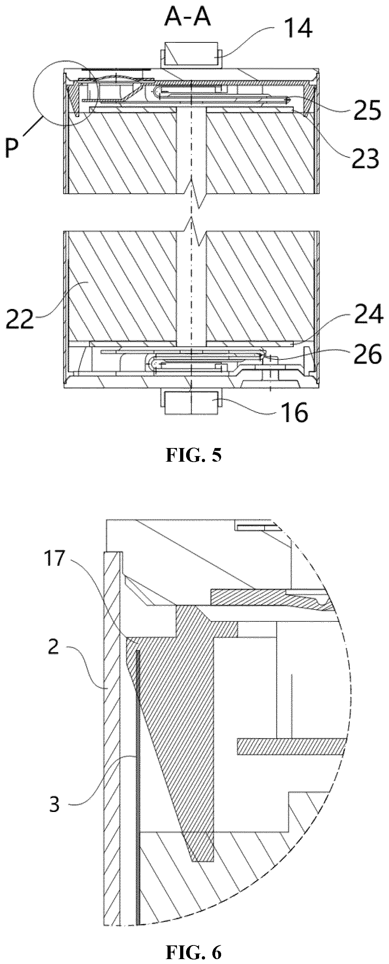

As shown in FIG. 5, the cell 2 comprises a main body part 22, a first tab 23 extending from a first end of the main body part 22, and a second tab 24 extending from a second end of the main body part 22. Some parts of the positive electrode plate and the negative electrode plate with active materials form the main body part 22 of the cell 2, and other parts of the positive electrode plate and the negative electrode plate without active materials form the first tab 23 and the second tab 24 of the cell 2 respectively. In the embodiment as shown in FIG. 5, the first tab 23 and the second tab 24 serve as a positive tab and a negative tab respectively, and are located at both ends of the main body part 22 respectively. In other embodiments, the first tab 23 and the second tab 24 may be located together at one end of the main body part 22.

In charging and discharging processes of the battery, a positive electrode active material and a negative electrode active material react with the electrolyte solution, the first tab 23 is connected to the first terminal 14, and the second tab 24 is connected to the second terminal 16 to form a current circuit. The electrode may be a winded structure or a stacked structure, which is not limited in the embodiments of the present application.

The first tab 23 may be electrically connected to the first terminal 14 through a first connecting sheet 25, and the second tab 24 may be electrically connected to the second terminal 16 through a second connecting sheet 26.

According to some embodiments of the present application, as shown in FIG. 3, the cell 2 is arranged inside the case 1, and there is a gap between an outer wall of the cell 2 and an inner wall of the case 1.

The first expandable member 3 and the second expandable member 4 are both arranged in the gap. Moreover, when encountering the electrolyte solution added into the case 1, both the first expandable member 3 and the second expandable member 4 can expand to fill the gap, reduce a movable space of the cell 2, restrict relative movement between the cell 2 and the case 1, and reduce the possibility of fatigue fracture of an adapter plate, which is also conductive to protecting tabs, reducing the possibility for the tabs to be stretched or compressed, and effectively extending the service life of the tabs, the adapter plate, and the whole battery cell.

Moreover, the first expandable member 3 and the second expandable member 4 are spaced apart. This arrangement can allow a part of the cell 2 that needs to be exposed or avoided to be arranged between the first expandable member 3 and the second expandable member 4, thereby preventing the first expandable member 3 and the second expandable member 4 from blocking the part of the cell 2 that needs to be exposed or needs to be avoided.

In an embodiment provided in the present application, the first expandable member 3 and the second expandable member 4 may be spaced apart in an axial direction of the cell 2, or may be spaced apart in a circumferential direction of the cell 2.

There are many possibilities for expansion directions of the first expandable member 3 and the second expandable member 4 during expansion. In order to achieve the purpose of restricting relative movement between the cell 2 and the case 1 in a first direction, the first expandable member 3 and the second expandable member 4 may be spaced apart in a direction different from the first direction, so that the first expandable member 3 and the second expandable member 4 each have an expandable space in the direction different from the first direction, to avoid causing extrusion on other components in the direction different from the first direction or causing the first expandable member 3 and the second expandable member 4 to wrinkle or fall off. For example, in order to achieve the purpose of restricting relative movement between the cell 2 and the case 1 in a radial direction of the cell 2, the first expandable member 3 and the second expandable member 4 may be spaced apart in the circumferential or axial direction of the cell 2, and the radial relative movement between the cell 2 and the case 1 may be restricted by the expansion of the first expandable member 3 and the second expandable member 4 in the radial direction of the cell 2. Moreover, since the first expandable member 3 and the second expandable member 4 are spaced apart in the circumferential or axial direction of the cell 2, the first expandable member 3 and the second expandable member 4 each can have an expansion space in the circumferential or axial direction of the cell 2, to avoid extruding other components in the circumferential or axial direction, or causing the first expandable member 3 and the second expandable member 4 to wrinkle or fall off.

In some embodiments, the cell 2 is provided with a labeling portion 21, the labeling portion 21 is labeled with preset information, and the labeling portion 21 is located between the first expandable member 3 and the second expandable member 4. In this way, the labeling portion 21 can be exposed from the gap between the first expandable member 3 and the second expandable member 4, thereby preventing the first expandable member 3 and the second expandable member 4 from blocking the labeling portion 21.

The labeling portion 21 may be a text, a pattern, a barcode, or a two-dimensional code, etc. The preset information labeled on the labeling portion 21 may be production date, production place, material, batch, etc. of the cell 2.

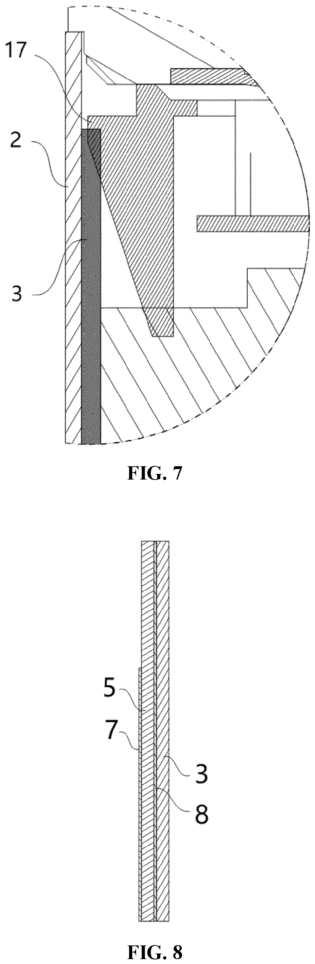

As shown in FIGS. 4-6, before encountering the electrolyte solution, the first expandable member 3 is arranged in the gap between the inner wall of the case 1 and the outer wall of the cell 2, and there are still some gaps between the first expandable member 3 and the inner wall of the case 1. As shown in FIG. 7, after encountering the electrolyte solution, the first expandable member 3 expands until the first expandable member 3 fully fills the whole gaps, and the first expandable member 3 contacts with the inner wall of the case 1, so that the cell 2 does not have a movable space in the radial direction, that is, radial movement of the cell 2 is restricted. Further, since there is a certain friction force between the first expandable member 3 and the inner wall of the case 1, the movement of the cell 2 along the axial direction is also restricted, thereby effectively protecting the connecting sheets and the tabs, which is conductive to extending the service life of the battery cell.

In some embodiments, the first expandable member 3 and/or the second expandable member 4 are/is configured to, after expansion, restrict relative movement between the cell 2 and the case 1 in the radial direction and the axial direction of the cell 2.

After expansion, the first expandable member 3 and/or the second expandable member 4 can restrict the relative movement between the cell 2 and the case 1 in the radial direction and the axial direction of the cell 2, thereby restricting the swaying of the cell 2 in the case 1, reducing the possibility of fatigue of the connecting sheets; further reducing the possibility for the tabs to be stretched or compressed, and effectively protecting the tabs.

There are many options for the arrangement of the first expandable member 3 and the second expandable member 4. For example, the first expandable member 3 and the second expandable member 4 may be spaced apart in the circumferential direction of the cell 2, and the labeling portion 21 may be located circumferentially between the first expandable member 3 and the second expandable member 4.

As shown in FIG. 3, in some embodiments, the first expandable member 3 is arranged circumferentially around the cell 2; and/or the second expandable member 4 is arranged circumferentially around the cell 2. The advantage of this arrangement is that the gap can be filled in the whole circumferential direction of the cell 2, thus effectively ensuring the restriction effects on the movement of the cell 2 relative to the case 1.

In the embodiment as shown in FIG. 3, both the first expandable member 3 and the second expandable member 4 are arranged circumferentially around the of the cell 2, and in the axial direction of the cell 2, there is a preset distance between the first expandable member 3 and the second expandable member 4, so that the labeling portion 21 is exposed from the gap between the first expandable member 3 and the second expandable member 4.

In some embodiments, the battery cell further comprises an insulating member, the cell 2 comprises a main body part 22, a first tab 23 extending from a first end of the main body part 22, and a second tab 24 extending from a second end of the main body part 22, and the insulating member is configured to electrically isolate the first tab 23 and the second tab 24 from the case 1 respectively.

The insulating member is arranged, so that the first tab 23 and the second tab 24 are electrically isolated from the case 1 respectively to prevent the case 1 from being charged and causing an electric shock accident; and prevent the first tab 23 and the second tab 24 from being electrically connected through the case 1 and causing a short circuit of the battery.

In some embodiments, the insulating member comprises a first insulating member 5 configured to electrically isolate the first tab 23 from the case 1 and a second insulating member 6 configured to electrically isolate the second tab 24 from the case 1, the cell 2 comprises the labeling portion 21, and the labeling portion 21 is located between the first insulating member 5 and the second insulating member 6.

The first insulating member 5 and the second insulating member 6 are arranged, to avoid the labeling portion 21, and prevent the insulating member from blocking the labeling portion 21.

In some embodiments, the first insulating member 5 is arranged circumferentially around the first tab 23; and/or the second insulating member 6 is arranged circumferentially around the second tab 24.

The first insulating member 5 surrounds in a circumferential direction of the first tab 23, to achieve comprehensive electrical isolation in the circumferential direction of the first tab 23.

The second insulating member 6 surrounds in a circumferential direction of the second tab 24, to achieve comprehensive electrical isolation in the circumferential direction of the second tab 24.

In some embodiments, the first insulating member 5 is arranged circumferentially around the first tab 23 and at least a part of the main body part 22; and /or the second insulating member 6 is arranged circumferentially around the second tab 24 and at least a part of the main body part 22.

The first insulating member 5 surrounds in a circumferential direction of the first tab 23 and at least a part of the main body part 22, to fix the first insulating member 5 on the main body part 22, and avoid damage to the first tab 23 due to connection to the first tab 23.

The second insulating member 6 surrounds in a circumferential direction of the second tab 24 and at least a part of the main body part 22, to fix the second insulating member 6 on the main body part 22, and avoid damage to the second tab 24 due to connection to the second tab 24.

In some embodiments, the first expandable member 3 is arranged between the first insulating member 5 and the inner wall of the case 1; and/or the second expandable member 4 is arranged between the second insulating member 6 and the inner wall of the case 1.

The first expandable member 3 is arranged between the first insulating member 5 and the inner wall of the case 1, to isolate the first expandable member 3 from the first tab 23 through the first insulating member 5, thereby preventing the first expandable member 3 after expansion from causing extrusion damage to the first tab 23.

The second expandable member 4 is arranged between the second insulating member 6 and the inner wall of the case 1, to isolate the second expandable member 6 from the second tab 24 through the second insulating member 4, thereby preventing the second expandable member 4 after expansion from causing extrusion damage to the second tab 24.

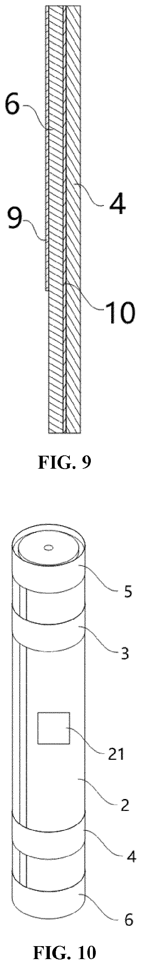

As shown in FIGS. 8 and 9, in some embodiments, the battery cell further comprises a first adhesive 7, the first insulating member 5 being adhesively connected to the main body part 22 through the first adhesive 7; and/or the battery cell further comprises a second adhesive 9, the second insulating member 6 being adhesively connected to the main body part 22 through the second adhesive 9.

The first insulating member 5 is connected to the main body part 22 through the first adhesive 7, and the second insulating member 6 is connected to the main body part 22 through the second adhesive 9. The connections are very firm with easy operations.

As shown in FIGS. 8 and 9, in some embodiments, the battery cell further comprises a third adhesive 8, the first expandable member 3 being adhesively connected to the first insulating member 5 through the third adhesive 8; and/or the battery cell further comprises a fourth adhesive 10, the second expandable member 4 being adhesively connected to the second insulating member 6 through the fourth adhesive 10.

The first insulating member 5 is connected to the first expandable member 3 through the third adhesive 8, and the second insulating member 6 is connected to the second expandable member 4 through the fourth adhesive 10. The connections are very firm with easy operations.

As shown in FIG. 8, the length of the first adhesive 7 is smaller than the length of the third adhesive 8, to prevent the first adhesive 7 from bonding to the first tab 23. As shown in FIG. 9, the length of the second adhesive 9 is smaller than the length of the fourth adhesive 10, to prevent the second adhesive 9 from bonding to the second tab 24.

In various embodiments provided in the present application, types of the first adhesive 7, the second adhesive 9, the third adhesive 8, and the fourth adhesive 10 may be the same, or may be different.

As shown in FIG. 10, in some embodiments, in the axial direction of the cell 2, there is a preset distance between the first expandable member 3 and the first insulating member 5; and/or in the axial direction of the cell 2, there is a preset distance between the second expandable member 4 and the second insulating member 6. In this way, the first expandable member 3 can be isolated from the first insulating member 5 in the axial direction, and the second expandable member 4 can be isolated from the second insulating member 6 in the axial direction, so that the first insulating member 5 and the second insulating member 6 can be arranged independent of the first expandable member 3 and the second expandable member 4 respectively without the need for matching the first expandable member 3 and the second expandable member 4, and so that, after expansion, the first expandable member 3 and the second expandable member 4 can contact with the inner wall of the case 1.

In the above embodiments, the first expandable member 3 and the second expandable member 4 may be connected to the main body part 22 of the cell 2, or may be connected to the case 1.

In various embodiments provided in the present application, an oriented polystyrene heat shrinkable film (OPS for short) or the like may be used as the first expandable member 3 and the second expandable member 4. The first insulating member 5 and the second insulating member 6 may each be made of a plastic material, such as polyethylene terephthalate (PET for short).

Based on the battery cell in the above embodiments, the present application further provides a battery. The battery comprises the above battery cell.

Based on the battery in the above embodiments, the present application further provides an electrical device. The electrical device comprises the above battery, and the battery is configured to supply electric energy to the electrical device.

The positive effects of the battery cell in the above embodiments are also applicable to the battery cell and the electrical device, which will not be repeated here.

The battery cell provided in some embodiments of the present application will be introduced below with reference to FIGS. 3-10.

In the embodiment as shown in FIG. 3, the battery cell comprises a case 1, a cell 2, a first expandable member 3, and a second expandable member 4.

The case 1 comprises an accommodating body 11, a first end cover 12, and a second end cover 13. The accommodating body 11 presents a cylindrical shape, and openings are provided at both ends of the accommodating body 11 respectively. The first end cover 12 and the second end cover 13 are configured to close the openings at both ends of the accommodating body 11 respectively. The accommodating body 11 is configured to provide an accommodating space. The cell 2, the first expandable member 3, and the second expandable member 4 are all arranged in the accommodating space of the accommodating body 11.

The shape of the cell 2 is a cylindrical shape. A labeling portion 21 is pasted on an outer wall of the cell 2, and the labeling portion 21 is labeled with preset information. There is a gap between the outer wall of the cell 2 and an inner wall of the case 1. The first expandable member 3 and the second expandable member 4 present cylindrical shapes, and are arranged circumferentially around the cell 2. In the axial direction of the cell 2, there is the preset distance between the first expandable member 3 and the second expandable member 4, and the first expandable member 3 and the second expandable member 4 are arranged on both sides of the labeling portion 21 respectively, so that the labeling portion 21 can be exposed to prevent the first expandable member 3 and the second expandable member 4 from blocking the labeling portion 21.

The first expandable member 3 and the second expandable member 4 can expand after encountering the electrolyte solution. After expansion, the first expandable member 3 and the second expandable member 4 contact with the inner wall of the case 1, thereby reducing the gap between the outer wall of the cell 2 and the inner wall of the case 1, restricting the relative movement between the cell 2 and the case 1 in the radial direction, and reducing the possibility of fatigue fracture of the connecting sheets. Moreover, after the first expandable member 3 and the second expandable member 4 contact with the inner wall of the case 1, there is a certain friction force between each of the first expandable member 3 and the second expandable member 4 and the inner wall of the case 1, thereby further restricting the relative movement between the cell 2 and the case 1 in the axial direction, and reducing the possibility for the tabs at both ends of the cell 2 to be stretched or compressed.

As shown in FIG. 4, the first end cover 12 is provided with a first terminal 14 and a first explosion-proof valve 15. The first terminal 14 is electrically connected to the first tab 23 on the cell 2 through the first connecting sheet 25. The first explosion-proof valve 15 is configured to release pressure when a pressure in the battery cell reaches a preset pressure.

Similarly, the second end cover 13 may be provided with a second terminal 16 and a second explosion-proof valve. The second terminal 16 is electrically connected to the second tab 24 on the cell 2 through the second connecting sheet 26. The second explosion-proof valve is configured to release pressure when the pressure in the battery cell reaches the preset pressure.

As shown in FIG. 5, the cell 2 comprises a main body part 22, a first tab 23 extending from a first end of the main body part 22, and a second tab 24 extending from a second end of the main body part 22. The first end cover 12 covers above the first tab 23, and the second end cover 13 covers bottom of the second tab 24.

As shown in FIGS. 6 and 7, a third insulating member 17 is provided on an inner side of the first end cover 12. Through the third insulating member 17, an electrically connecting component on the inner side of the first end cover 12 can be electrically isolated from the first end cover 12, and the first tab 23 can also be electrically isolated from the case 1.

In the state as shown in FIG. 6, the first expandable member 3 does not expand. In this case, there is a certain gap between the first expandable member 3 and the inner wall of the case 1, and the cell 2 can sway in the case 1.

In the state as shown in FIG. 7, the first expandable member 3 expands. In this case, the first expandable member 3 contacts with the inner wall of the case 1, thus eliminating the gap between the cell 2 and the case 1, thereby restricting the relative movement between the cell 2 and the case 1 in the radial direction, and reducing the possibility of fatigue fracture of the connecting sheets. Moreover, there is a certain friction force between the first expandable member 3 and the inner wall of the case 1, thereby further restricting the relative movement between the cell 2 and the case 1 in the axial direction, and reducing the possibility for the first tab 23 and the second tab 24 to be stretched or compressed.

Similarly, after expansion, the second expandable member 4 can also contact with the inner wall of the case 1, thus eliminating the gap between the cell 2 and the case 1, restricting the relative movement between the cell 2 and the case 1 in the radial direction together with the first expandable member 3, and reducing the possibility of fatigue fracture of the connecting sheets. Moreover, there is also a certain friction force between the second expandable member 4 and the inner wall of the case 1, thereby restricting the relative movement between the cell 2 and the case 1 in the axial direction, and reducing the possibility for the first tab 23 and the second tab 24 to be stretched or compressed.

As shown in FIG. 8, the battery cell further comprises a first insulating member 5 arranged circumferentially around the first tab 23 and a part of the main body part 22. Both the first insulating member 5 and the first expandable member 3 present cylindrical shapes, the first insulating member 5 is bonded to an outer periphery of the main body part 22 through the first adhesive 7, the first expandable member 3 is bonded to an outer periphery of the first insulating member 5 through the third adhesive 8, and the length of the third adhesive 8 is larger than the length of the first adhesive 7. In this way, the first insulating member 5 and the first expandable member 3 are combined into a whole, which not only can electrically isolate the first tab 23 from the case 1, but also can reduce the gap between the first expandable member 3 and the case 1 after encountering the electrolyte solution, thus restricting the radial and axial movement of the cell 2. Moreover, in the expansion process of the first expandable member 3, the first tab 23 can be protected through the first insulating member 5, thereby reducing the possibility for the first tab 23 to be subjected to stretching or extrusion damage.

As shown in FIG. 8, the battery cell further comprises a second insulating member 6 arranged circumferentially around the second tab 24 and a part of the main body part 22. Both the second insulating member 6 and the second expandable member 4 present cylindrical shapes, the second insulating member 6 is bonded to the outer periphery of the main body part 22 through the second adhesive 9, the second expandable member 4 is bonded to an outer periphery of the second insulating member 6 through the fourth adhesive 10, and the length of the fourth adhesive 10 is larger than the length of the second adhesive 9. In this way, the second insulating member 6 and the second expandable member 4 are combined into a whole, which not only can electrically isolate the second tab 24 from the case 1, but also can reduce the gap between the second expandable member 4 and the case 1 after encountering the electrolyte solution, thus restricting the radial and axial movement of the cell 2. Moreover, in the expansion process of the second expandable member 4, the second tab 24 can be protected through the second insulating member 6, thereby reducing the possibility for the second tab 24 to be subjected to stretching or extrusion damage.

In the embodiment as shown in FIG. 10, the first insulating member 5 surrounds the circumferential direction of the first tab 23 and a part of the main body part 22; and the second insulating member 6 is arranged circumferentially around the second tab 24 and a part of the main body part 22. The first expandable member 3 surrounds the circumferential direction of the main body part 22, and the second expandable member 4 surrounds the circumferential direction of the main body part 22. In the axial direction of the cell 2, the first expandable member 3 and the second expandable member 4 are located between the first insulating member 5 and the second insulating member 6, and the labeling portion 21 is located between the first expandable member 3 and the second insulating member 4. In this embodiment, after expansion when encountering the electrolyte solution, the first expandable member 3 and the second expandable member 4 contact with the inner wall of the case 1. Even when there is still a gap between the first insulating member 5 and the case 1 and between the second insulating member 6 and the case 1, but at two axial positions where the first expandable member 3 and the second expandable member 4 are located, the gap between the cell 2 and the case 1 can be reduced, so that the effects of restricting the radial and axial movement of the cell 2 can still be achieved.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but includes all technical solutions falling within the scope of the claims.

## Claims

1. A battery cell, comprising:
a case (1);
a cell (2) arranged inside the case (1), there being a gap between an outer wall of the cell (2) and an inner wall of the case (1);
a first expandable member (3) arranged in the gap, the first expandable member (3) being configured to expand when encountering an electrolyte solution to fill the gap; and
a second expandable member (4) arranged in the gap, the second expandable member (4) being configured to expand when encountering an electrolyte solution to fill the gap, the first expandable member (3) and the second expandable member (4) being spaced apart.

2. The battery cell according to claim 1, wherein the cell (2) comprises a labeling portion (21), the labeling portion (21) is labeled with preset information, and the labeling portion (21) is located between the first expandable member (3) and the second expandable member (4).

3. The battery cell according to claim 1 or 2, wherein the first expandable member (3) and/or the second expandable member (4) are/is configured to, after expansion, restrict relative movement between the cell (2) and the case (1) in a radial direction and an axial direction of the cell (2).

4. The battery cell according to any one of claims 1-3, wherein the first expandable member (3) is arranged circumferentially around the cell (2); and/or the second expandable member (4) is arranged circumferentially around the cell (2).

5. The battery cell according to any one of claims 1-4, wherein the battery cell further comprises an insulating member, the cell (2) comprises a main body part (22), a first tab (23) extending from a first end of the main body part (22), and a second tab (24) extending from a second end of the main body part (22), and the insulating member is configured to electrically isolate the first tab (23) and the second tab (24) from the case (1) respectively.

6. The battery cell according to claim 5, wherein the insulating member comprises a first insulating member (5) configured to electrically isolate the first tab (23) from the case (1) and a second insulating member (6) configured to electrically isolate the second tab (24) from the case (1), and the cell (2) comprises the labeling portion (21) located between the first insulating member (5) and the second insulating member (6).

7. The battery cell according to claim 6, wherein the first insulating member (5) is arranged circumferentially around the first tab (23); and/or the second insulating member (6) is arranged circumferentially around the second tab (24).

8. The battery cell according to claim 6 or 7, wherein the first insulating member (5) is arranged circumferentially around the first tab (23) and at least a part of the main body part (22); and /or the second insulating member (6) is arranged circumferentially around the second tab (24) and at least a part of the main body part (22).

9. The battery cell according to any one of claims 6-8, wherein the first expandable member (3) is arranged between the first insulating member (5) and the inner wall of the case (1); and/or the second expandable member (4) is arranged between the second insulating member (6) and the inner wall of the case (1).

10. The battery cell according to any one of claims 6-9, wherein the battery cell further comprises a first adhesive (7), the first insulating member (5) being adhesively connected to the main body part (22) through the first adhesive (7); and/or the battery cell further comprises a second adhesive (9), the second insulating member (6) being adhesively connected to the main body part (22) through the second adhesive (9).

11. The battery cell according to any one of claims 6-10, wherein the battery cell further comprises a third adhesive (8), the first expandable member (3) being adhesively connected to the first insulating member (5) through the third adhesive (8); and/or the battery cell further comprises a fourth adhesive (10), the second expandable member (4) being adhesively connected to the second insulating member (6) through the fourth adhesive (10).

12. The battery cell according to any one of claims 6-8, wherein in the axial direction of the cell (2), there is a preset distance between the first expandable member (3) and the first insulating member (5); and/or in the axial direction of the cell (2), there is a preset distance between the second expandable member (4) and the second insulating member (6).

13. A battery, comprising the battery cell according to any one of claims 1-12.

14. An electrical device, comprising the battery according to claim 13, wherein the battery is configured to supply electric energy to the electrical device.
